Europäisches Patentamt

European Patent Office

Office européen des brevets

(19)

(11) Veröffentlichungsnummer: **0 134 844**
**B1**

(12) **EUROPÄISCHE PATENTSCHRIFT**

(45) Veröffentlichungstag der Patentschrift:
**13.05.87**

(51) Int. Cl.⁴: **F 16 L 9/14**

(21) Anmeldenummer: **83201325.4**

(22) Anmeldetag: **15.09.83**

(54) **Rohrstrang zum Verlegen von Pipelines auf dem Meeresboden.**

(43) Veröffentlichungstag der Anmeldung:
**27.03.85 Patentblatt 85/13**

(45) Bekanntmachung des Hinweises auf die Patenterteilung:
**13.05.87 Patentblatt 87/20**

(84) Benannte Vertragsstaaten:
**AT DE FR GB NL**

(56) Entgegenhaltungen:
**AT - B - 236 881**
**AU - B - 483 613**
**DE - B - 2 631 843**

(73) Patentinhaber: **Pipeline-Coating GmbH,**
**D-4100 Duisburg 1 (DE)**

(72) Erfinder: **König, Rainer, Mercatorstrasse 114,**
**D-4100 Duisburg 1 (DE)**

(74) Vertreter: **Ackmann, Günther, Dr.-Ing.,**
**Claubergstrasse 24 Postfach 10 09 22,**
**D-4100 Duisburg 1 (DE)**

## Beschreibung

Die Erfindung betrifft einen Rohrstrang zum Verlegen von Pipelines auf dem Meeresboden mittels eines mit einer Spannvorrichtung ausgerüsteten Verlegeschiffes, bestehend aus einem Stahlrohr mit einer Kunststoffbeschichtung, auf der eine, vorgespannte Bewehrungselemente enthaltende Betonummantelung aufgebracht ist.

Für den Transport von Erdöl oder Erdgas im Off-Shore-Gebiet zwischen den Bohrinseln und der Küste finden auf dem Meeresboden verlegte Pipelines, wie aus DE-B-2 631 843 bekannt, Verwendung. Das aus Stahl bestehende Produktenrohr ist zum Schutz gegen Korrosion aussen mit einer Kunststoffbeschichtung versehen. Weiterhin ist eine als Ballast dienende Betonummantelung vorgesehen, in der sich eine vor der Betonerhärtung vorgespannte Bewehrung befindet. Das Verschweissen einzelner mit Kunststoff beschichteter Rohrstücke zu einem Rohrstrang und das Aufbringen der Betonummantelung geschieht fortschreitend in Verbindung mit einem Verlegeschiff, wobei der betonummantelte Rohrstrang in einer Spannvorrichtung gehalten und über eine gebogene Auslegerrutsche (stinger) in das Gewässer abgelassen wird (Vgl. z.B. The Oil and Gas Journal Febr. 26, 1973, Seiten 49-52). Die Spannvorrichtung besitzt zwei seitliche Spannorgane, die mit gliederartig umlaufenden Spannbacken ausgerüstet und hydraulisch gegeneinander verspannbar sind. Diese Spannorgane müssen die gewaltigen Zugkräfte aufnehmen, die durch den zwischen Auslegerrutsche und dem bis zu mehreren hundert Meter tiefen Meeresboden im Gewässer hängenden Rohrabschnitt verursacht werden. Hinzu kommen unkontrollierbare Kräfte durch die Schiffsbewegungen, die über die Spannvorrichtung ebenfalls auf den eingespannten Rohrstrang einwirken. Während des Verlegens wirken die Spannorgane daher ständig und fortlaufend mit so grossen Druck- und Stosskräften auf die Betonummantelung ein, dass der Reibungsschluss zwischen dem Betonmantel und dem mit Kunststoff beschichteten Produktenrohr infolge einer Gefügelockerung aufgehoben wird und das Produktenrohr durch den von der Spannvorrichtung gehaltenen Betonmantel durchrutscht. Zur Behebung eines solchen Schadens muss der Rohrstrang in dem Schadbereich wieder hochgehoben werden. Die Reparaturarbeiten sind sehr aufwendig und teuer.

Demgegenüber liegt der Erfindung die Aufgabe zugrunde, den Rohrstrang derart auszubilden, dass ein Durchrutschen des Produktenrohres durch die eingespannte Betonummantelung verhindert wird.

Diese Aufgabe wird erfindungsgemäss dadurch gelöst, dass die Betonummantelung mit zwei diametral gegenüberliegenden, bis zur Kunststoffbeschichtung reichenden Längsschlitzen versehen ist, in denen je eine Schiene aus einem elastischen und/oder plastischen Werkstoff angeordnet ist.

Die Betonummantelung besteht praktisch aus zwei Halbschalen, die durch die Querbewehrung zusammengehalten werden und zwischen denen die beiden Längsschlitze verlaufen. Durch die Unterteilung in Längsrichtung wirken die beiden Halbschalen beim Anpressen der Spannbacken der Spanneinrichtung wie Klemmbacken auf das Stahlrohr ein, ohne dass es zu einer Zerstörung des Betongefüges kommt. Hierdurch wird das Stahlrohr mit einem wesentlich grösseren Reibungsschluss in der halbschalenförmigen Betonummantelung festgehalten, als es bei einer geschlossenen rohrförmigen Betonummantelung möglich ist. Ein Durchrutschen wird somit verhindert. Die Schienen dienen einerseits der Verfüllung der Längsschlitze und erlauben anderseits Querbewegungen der Halbschalen beim Anpressen.

Um beim Verspannen des Rohrstranges während der Verlegearbeit eine etwaige ovale Verformung des Stahlrohres, welche ebenfalls zerstörend auf die Betonummantelung einwirken würde, auszugleichen, ist zweckmässig auf die Kunststoffbeschichtung des Stahlrohres im Bereich der Längsschlitze eine mit einer plastischen Masse imprägnierte Gewebebahn aufgebracht. Beide «verformbaren» Gewebebahnen lassen eine gewisse Verformung des im Querschnitt kreisrunden Stahlrohres zu. Die Gewebebahnen wirken sich weiterhin beim Durchbiegen des Rohrstranges während der Verlegearbeit günstig aus.

Um eine wendelartige Verlegung der Querbewehrung zu ermöglichen, sind die Schienen zweckmässig mit Querschlitzen versehen, die bis etwa zur halben Höhe ihres Steges reichen. Die der Querbewehrung dienenden Kunststoffseile oder dgl. können durch die Querschlitze geführt werden, wobei die Schienen für die Kunststoffseile bis zur Erhärtung des Betons Halterungsorgane bilden. Die Schienen können entweder aus einem elastischen und/oder plastischen Gummi oder Kunststoff, oder aus einer steifen Schiene aus Kunststoff mit einer Gummibeschichtung oder aus einem Weichholz bestehen.

In der Zeichnung ist ein Ausführungsbeispiel dargestellt; es zeigt:

Fig. 1 einen Rohrstrang in einem Querschnitt,

Fig. 2 einen Ausschnitt der Fig. 1 in einem grösseren Massstab und

Fig. 3 den Gegenstand der Fig. 2 in einem Längsschnitt.

Das Stahlrohr 1 ist auf seinem Aussenmantel mit einer Kunststoffbeschichtung 2, z.B. aus Polyäthylen versehen. Die Oberfläche der beispielsweise durch Strangpressen, Aufsintern oder dgl. aufgetragenen Kunststoffbeschichtung 2 ist in der Regel sehr glatt. Je nach dem Durchmesser des Stahlrohres 1, der üblicherweise zwischen 30 und 60 cm liegt, beträgt die Dicke der Kunststoffbeschichtung 2 etwa 3 bis 5 mm. Auf der Kunststoffbeschichtung 2 ist eine Betonummantelung 3 aufgetragen, in der vor der Betonerhärtung vorgespannte Bewehrungselemente in der Form einer Längsbewehrung 4 und einer Querbewehrung 5 angeordnet sind. Vorzugsweise werden als Bewehrungselemente Kunststoffseile verwendet. Die Herstellung der Betonummantelung geschieht mit Hilfe einer um das Stahlrohr 1 mit Abstand gelegten Verschalung (nicht dargestellt).

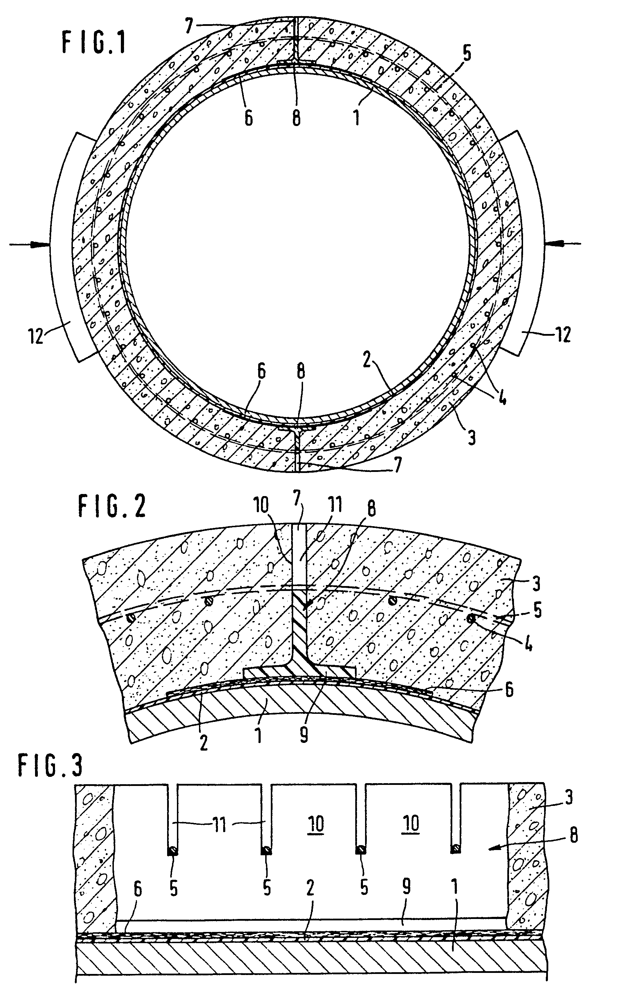

Wie Fig. 1 erkennen lässt, ist im oberen und unteren Bereich in der Betonummantelung 3 je ein Längsschlitz 7 vorgesehen, in dem jeweils eine Schiene 8 aus einem elastischen und/oder plastischen Werkstoff angeordnet ist. Auf diese Art und Weise besteht die Betonummantelung aus zwei halbschalenförmigen Mantelteilen, welche im Bereich des Längsschlitzes 7 nicht unmittelbar gegeneinanderliegen. Beide Halbschalen sind durch die Querbewehrung 5 in Form eines oder mehrerer wendelförmig umgelegter Kunststoffseile miteinander verbunden. Die Schienen 8 dienen einerseits dazu, den zugehörigen Längsschlitz 7 zu verfüllen und dabei so elastisch bzw. plastisch zu bleiben, dass die Abdichtung bei einer Veränderung der Schlitzbreite erhalten bleibt.

Zur Herstellung der Betonummantelung wird zunächst auf die Kunststoffbeschichtung 2 im Bereich der vorgesehenen Längsschlitze 7 eine mit einer plastischen Masse imprägnierte Gewebebahn (6) aufgebracht (vgl. Fig. 2 und 3).

Die Breite dieser Gewebebahn kann etwa einem Bogen von 30° entsprechen. Die Gewebebahn 6 kann beispielsweise aus einem 3 bis 4 mm starken bituminierten Glasgewebe bestehen. Auf die beiden Gewebebahnen 6, diametral gegenüberliegend angeordnet, werden die Schienen 8 mit ihrem Schienenfuss 9 aufgesetzt. Wie insbesondere Fig. 3 erkennen lässt, ist der Steg 10 der Schiene 8 mit Querschlitzen 11 versehen, die bis etwa zur halben Höhe ihres Steges 10 reichen. In diese Schlitze werden die wendelförmig geführten Kunststoffseile für die Querbewehrung 5 eingelegt; die Schienen 8 wirken daher auch als Halterungsorgane für die Bewehrung. Anschliessend wird eine übliche Rohrverschalung angebracht. Der mit Beton verfüllte Zwischenraum bildet nach der Erhärtung die Betonummantelung 3.

In Fig. 1 ist angedeutet, dass der Rohrstrang beim Verlegen auf einem Verlegeschiff mittels Spannbacken 12 einer Spannvorrichtung verspannt und axial transportiert wird. Es ist deutlich erkennbar, dass die beiden Halbschalen der Betonummantelung 3 wie Klemmbacken auf das kunststoffbeschichtete Stahlrohr 1 einwirken. Beim Zusammendrücken gibt das Material der aus einem elastischen und/oder plastischen Werkstoff bestehenden Schiene 8 nach. Sollte der radiale Pressdruck so stark sein, dass sich das Stahlrohr 1 oval verformt, kann die mit einer plastischen Masse imprägnierte Gewebebahn 6 eine solche Verformung aufnehmen.

**Patentansprüche**

1. Rohrstrang zum Verlegen von Pipelines auf dem Meeresboden mittels eines mit einer Spannvorrichtung ausgerüsteten Verlegeschiffes, bestehend aus einem Stahlrohr (1) mit einer Kunststoffbeschichtung (2), auf der eine vorgespannte Bewehrungselemente enthaltende Betonummantelung (3) aufgebracht ist, dadurch gekennzeichnet, dass die Betonummantelung (3) mit zwei diametral gegenüberliegenden, bis zur Kunststoffbeschichtung (2) reichenden Längsschlitzen (7) versehen ist, in denen je eine Schiene (8) aus einem elastischen und/oder plastischen Werkstoff angeordnet ist.

2. Rohrstrang nach Anspruch 1, dadurch gekennzeichnet, dass auf die Kunststoffbeschichtung (2) im Bereich der Längsschlitze (7) eine mit einer plastischen Masse imprägnierte Gewebebahn (6) aufgebracht ist.

3. Rohrstrang nach Anspruch 1 oder 2, dadurch gekennzeichnet, dass die Schiene (8) mit Querschlitzen (11) versehen ist, die bis etwa zur halben Höhe ihres Steges (10) reichen.

4. Rohrstrang nach einem der Ansprüche 1 bis 3, dadurch gekennzeichnet, dass die Schiene (8) aus Gummi oder Kunststoff oder Weichholz besteht.

**Claims**

1. Piping for laying pipelines on the sea bed with the use of a pipe-laying ship having pipe-clamping means, the piping comprising a steel tube (1) having a plastics coating or covering (2) over which a prestressed concrete jacketing or envelope or the like (3) is applied, characterised in that the concrete jacketing (3) is formed with two diametrically opposite longitudinal slots (7) which extend as far as the plastics coating (2) and each of which receives a rod or bar or rail or the like (8) made of a resilient and/or plastic substance.

2. Piping according to claim 1, characterised in that a fabric strip (6) impregnated with a plastic composition is applied to the plastics coating (2) near the slots (7).

3. Piping according to claim 1 or 2, characterised in that the rod (8) is formed with cross-slots (11) which extend to approximately half the height of its web (10).

4. Piping according to claim 1 to 3, characterised in that the rod (8) is made of rubber or plastics or softwood.

**Revendications**

1. Tuyau destiné à la pose d'oléoducs au fond de la mer, au moyen d'une barge de pose munie d'un dispositif de blocage, et constitué d'une tube en acier (1) à revêtement en matière plastique (2), sur lequel est déposée une gaine en béton (3) contenant des éléments précontraints d'armature, caractérisé en ce que la gaine en béton (3) est munie de deux fentes longitudinales (7), diamétralement opposées, allant jusqu'au revêtement de matière plastique (2) et dans lesquelles sont disposés respectivement des rails (8) en un matériau élastique et/ou plastique.

2. Tuyau suivant la revendication 1, caractérisé en ce qu'une bande de tissu (6), imprégnée d'une composition plastique, est déposée sur le revêtement de matière plastique (2) dans la région des fentes longitudinales.

3. Tuyau suivant le revendication 1 ou 2, caractérisé en ce que le rail (8) est munie de fentes transversales (11) qui vont jusqu'à environ la moitié de la hauteur de son âme (10).

4. Tuyau suivant l'une des revendications 1 à 3, caractérisé en ce que le rail (8) est en caoutchouc ou en matière plastique ou en bois tendre.

FIG.1

FIG.2

FIG.3